# EUROPEAN PATENT SPECIFICATION

(11) **EP 0 769 737 B1**
(45) Date of publication and mention of the grant of the patent: **10.04.2002**
(21) Application number: 96116193.2
(22) Date of filing: 09.10.1996
(51) Int. Cl.: G06F 3/12, G07G 1/14

(54) **A printing apparatus with control function for external devices, and a control method therefor**
Drucker und Verfahren mit Steuerfunktion für externe Geräte
Dispositif et méthode d'impression avec une fonction de commande des dispositifs externs

(30) Priority: 13.10.1995 JP 26588195
(43) Date of publication of application: 23.04.1997
(73) Proprietor: SEIKO EPSON CORPORATION, Shinjuku-ku, Tokyo 163-0811 (JP)
(72) Inventor: Miyasaka, Masayo, c/o Seiko Epson Corporation, Suwa-shi, Nagano-ken, 392 (JP); Hyonaga, Takuya, c/o Seiko Epson Corporation, Suwa-shi, Nagano-ken, 392 (JP); Akiyama, Takaaki, c/o Seiko Epson Corporation, Suwa-shi, Nagano-ken, 392 (JP); Koakutsu, Naohiko, c/o Seiko Epson Corporation, Suwa-shi, Nagano-ken, 392 (JP); Teradaira, Mitsuaki, c/o Seiko Epson Corporation, Suwa-shi, Nagano-ken, 392 (JP)
(74) Representative: Hoffmann, Eckart, Dipl.-Ing.

(56) References cited:
- EP-A- 0 652 533
- WO-A-82/01609
- US-A- 4 438 507
- US-A- 4 989 163

## Description

The present invention relates to a printing apparatus having a cash drawer control function and to a control method therefor. More particularly, the invention relates to a printing apparatus capable of controlling a cash drawer irrespective of the status of the printing apparatus. The present invention is therefore particularly effective when used with systems for processing monetary transactions, such as point-of-sale (POS) terminals and electronic cash registers (ECR).

Conventional POS and ECR systems typically have the cash drawer in which money is held below the printing apparatus. The cash drawer is normally locked in a closed condition and opens in response to a cash drawer open/close signal issued from the printing apparatus. So-called terminal printing apparatuses that are connected through some interface to a host device to execute a printing process according to control commands received from the host device, comprise means for outputting the cash drawer open/close signal for a specified time from a specified output port. To reduce the standby time to completion of the control commands of the host device, the control commands are temporarily stored in a command buffer, and then read and executed in first-in-first-out order.

While the command buffer size varies according to the model and application of the printing apparatus, the command buffer is often also used as a print data buffer, and can therefore generally store a large number of control commands. Therefore, when many control commands are stored in the command buffer, a significant time interval may pass from the time at which the host device sends a cash drawer open command until the cash drawer is actually opened. More specifically, once a receipt printing or other printing process has been started, monetary transactions such as storing cash received or making customer change must wait until the printing process is completed. As a result, the user must wait for an extended period of time, and numerous problems therefore remain for printing apparatuses used in systems for processing monetary transactions, such as point-of-sale (POS) terminals and electronic cash registers (ECR).

Faster processing is demanded in printing apparatuses for the POS/ECR market in recent years. Because transaction processing in particular requires manual intervention, it is necessary to open the cash drawer immediately as soon as an open request is issued.

WO-A-8201609 discloses a POS terminal comprising a control unit, one or more keyboards as data input means, a journal printer, a receipt printer and a display as data output means, and control means for opening a cash drawer. In this prior art, command detection means is part of printer control means and receives and interpretes control commands read out of a data storage means. One or more such POS terminals are connected via a respective interface to a central host computer. The POS terminal itself is a dump terminal which is controlled by the host computer. Data entered via a keyboard at the POS terminal is sent to the host computer which responds by sending back control commands and data for display and/or printing. The control unit in the POS terminal serves as both, a buffer memory for ingoing and outgoing data and a switching network for distributing control commands and data received from the host computer to the respective units. The cash drawer is opened under the control of the host computer when an appropriate code is received. No detail regarding the structure and detailed functioning of how buffered data are distributed to the individual units are disclosed in this document.

EP-A-O 652 533 discloses a printing apparatus adapted to report certain status information to the host device it is connected to. In this context, the document discloses use of a first and a second command interpreter, one for interpreting commands read out of a FIFO buffer and the other for interpreting so-called real-time commands that bypass the FIFO buffer.

An object of the present invention is to provide a printing apparatus whereby the above problems can be solved, the load on the host device is reduced and operation is user-friendly.

This object is achieved with a printing apparatus as claimed in claim 1 and a method as claimed in claim 10. Preferred embodiments of the invention are subject-matter of the dependent claims.

As a result of the configuration of the invention, it is possible to independently control an externally connected device as requested by the host device even when command data for the printing process are stored in the data storage means. At the same time the invention provides for protecting the controlled external device from being oveloaded by a sequence of control commands following one another at a short interval.

It is possible to control the external device parallel to the printing process, to control the external device with priority over the printing process, or to control the external device after the end of the printing process when a printing process is being executed by the printer control means.

The process sequence is preferably set with consideration to the power supply capacity, the processing capacity of the printing apparatus and other considerations. More specifically, if there is sufficient power supply capacity, simultaneously executing control of both the printing apparatus and an external device is preferable with respect to processing speed: On the other hand, temporarily interrupting the printing process and controlling the external device is preferable in applications in which controlling the external device is of higher priority. However, if interrupting the printing process will degrade the print quality, it is preferable to let the external device wait for a break point in the printing process that will not result in degraded print quality, such as at a line end.

In an embodiment of the invention, the command data received in one-byte units from the host device can be detected and processed as they are received. It is therefore not necessary to store a specific number of bytes of command data, and the time required for the detection process can be divided into small pieces. Therefore, if either the data receiving means or the command detection means interrupts printing process control by the printer control means to at least either receive data from the host device or detect the predetermined command data, the benefits of distributing the detection process can be obtained.

Preferred embodiments of the invention will be described below with reference to the drawings, in which:
- Fig. 1: is a circuit block diagram of a control circuit suitable for an embodiment of the present invention,
- Fig. 2: is a functional block diagram of a control circuit suitable for an embodiment of the present invention,
- Fig. 3: is a flow chart illustrating one aspect of a control method according to the present invention, and
- Fig. 4: is a flow chart illustrating another aspect of a control method according to the present invention.

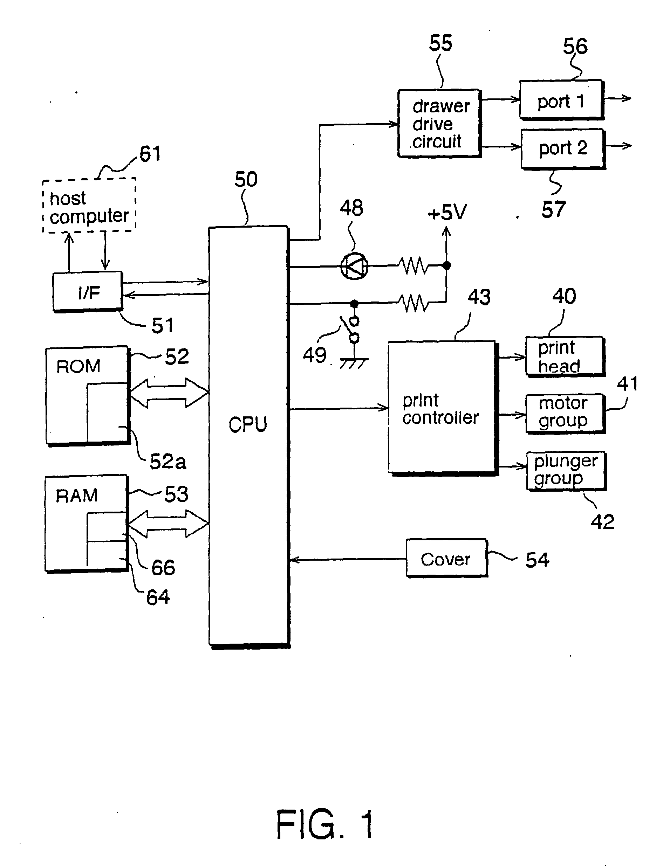

Fig. 1 is a block diagram of the control circuit of a printing apparatus suitable for an embodiment of the invention. Connected to CPU 50 which controls the entire printing apparatus are: cover sensor 54 for detecting whether the cover of the printing apparatus is open; panel switch 49 for manual paper feed control; interface 51 for connection to host computer 61; ROM 52 for storing the control program 52a, character print patterns and other data: and RAM 53 used as a receive buffer 64, a print buffer 66 etc..

Print data and command data input through interface 51 are stored in receive buffer 64 of RAM 53. CPU 50 then interprets these data, reads, in case of print data (e.g. a character code), the corresponding character print pattern from ROM 52, and controls, in case of a print, format or positioning command, print controller 43 to accomplish the printing process. More specifically, CPU 50 controls, via print controller 43, ink jet head or other print head 40, and motor group 41 for driving print head 40 and a recording medium; and drives plungers of plunger group 42 to hold cut-sheet forms or switch a recording medium transport path as necessary when the printing apparatus is designed to print to plural media.

Pulse output commands for requesting supply of a control or drive pulse to a cash drawer or other external device connected to the printing apparatus are also input through interface 51. In response to a pulse output command CPU 50 outputs a pulse from port 56 or port 57 through drawer drive circuit 55. Which port is used for pulse output is specified by a parameter of the pulse output command as will be described below. According to the present invention the pulse output command is a real-time command. A real-time command is immediately executed even if previously entered commands are still waiting for execution in receive buffer 64.

An example of a real-time command code is: DLE DC4 n m t. Each of the command code components DLE, DC4 and the values n, m and t is one byte expressed in hexadecimal notation as 10_{H}, 14_{H}, and the hexadecimal value corresponding to n, m and t. DLE and DC4 identify a real-time command. Parameter n determines the type of real-time command, i.e., which operation is to be executed. When n = 1, the command is interpreted to be a pulse output command. In case of a pulse output command, the number of an output port from which the pulse is to be output is defined by parameter m while t defines the pulse length (the ON time).

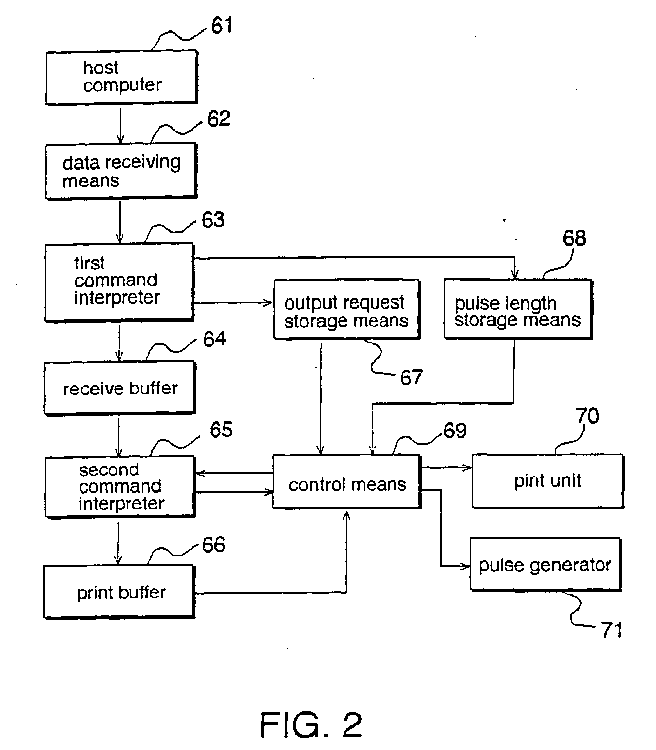

Fig. 2 is a functional block diagram suitable for an embodiment of the present invention, and shows the relationship between its various functional means. Host computer 61 transfers command data and print data to the printing apparatus. Data receiving means 62 receives the data from host computer 61 through interface 51, and is implemented in the present embodiment by means of an interrupt process started by interface 51. The received data are interpreted immediately upon being received by first command interpreter 63 implemented as part of the interrupt process for data receiving means 62.

First command interpreter 63 checks whether the received data represent a real-time command and, if so, causes the specified process to be executed according to the command parameters. All data having been interpreted by first command interpreter 63 are stored temporarily in receive buffer 64. Second command interpreter 65 reads the stored data in a first-in-first-out sequence in single data units, e.g., one byte at a time, interprets the data and discriminates print data from command data used to set various printing apparatus control parameters. The interpretation of the data stored in receive buffer 64 by second command interpreter 65 is executed in response to a request from control means 69. When the printing apparatus is in an idle state, for example, after a printing job is completed, control means 69 repeats checking whether receive buffer 64 is empty in a normal idling routine. If there are data in receive buffer 64, control means 69 causes second command interpreter to perform the interpretation described above.

It should be noted that while, in the present embodiment, the data from data receiving means 62 is stored in receive buffer 64 after having been processed by first command interpreter 63, the present invention shall not be so limited. It is also possible, for example, to store the data from data receiving means 62 in receive buffer 64 while passing these data to first command interpreter 63 in parallel.

Command data are processed by control means 69. More specifically, particular settings are made according to the command data, or particular operations are performed. If the received data is print data, a character print pattern is stored in print buffer 66 according to the data code. When printing is executed by control means 69, the print pattern is read from print buffer 66 to control print unit 70 and print. Print unit 70 comprises primarily print controller 43, print head 40, motor group 41 and plunger group 42 shown in Fig. 1.

When first command interpreter 63 confirms that the received data is a pulse output command, information indicating that a pulse output request was received is stored in storage means 67 of RAM 53. This can be accomplished, for example, by setting a particular flag. In the following this information will be referred to as "request flag". The pulse length is also stored in storage means 68. The output port number, another parameter of the command, may be separately stored in another storage means (area of RAM 53) or a respective request flag is provided for each port number.

Control means 69 monitors the request flag by polling storage means 67. When the request flag (or one of the request flags) is set, control means 69 outputs, by means of pulse generator 71, a pulse of a length according to the information in storage means 68 to the port whose number has been stored in RAM 53 (or which is associated with the request flag that is found to be set).

When the cover of the printing apparatus is open or paper is being transferred in response to paper transport switch 49 having been actuated, control means 69 comes in a so-called off-line state where it waits for the off-line state to be cancelled. More specifically, reading and executing commands from receive buffer 64 stops to assure operator safety when the printing apparatus cover is open to supply paper, for example. Because receive buffer 64 may overflow if data continue to be stored in receive buffer 64 in this state, the printing apparatus notifies the host device that data sent thereafter are not guaranteed to be received.

When control means 69 is in the off-line state, control means 69 only monitors data input from data receiving means 62, and cannot activate the second command interpreter 65. The first command interpreter 63 continues to operate irrespective of the off-line status while control means 69 monitors data input. In the present embodiment, a current pulse for driving a solenoid built into the cash drawer is output in response to the pulse output command; furthermore, pulse generator 71 and print unit 70 share the same power supply. Because the power supply does not have sufficient capacity to simultaneously drive both the solenoid via pulse generator 71 and print unit 70, control means 69 can only drive one of the devices, i.e., either printing is performed or pulse generation.

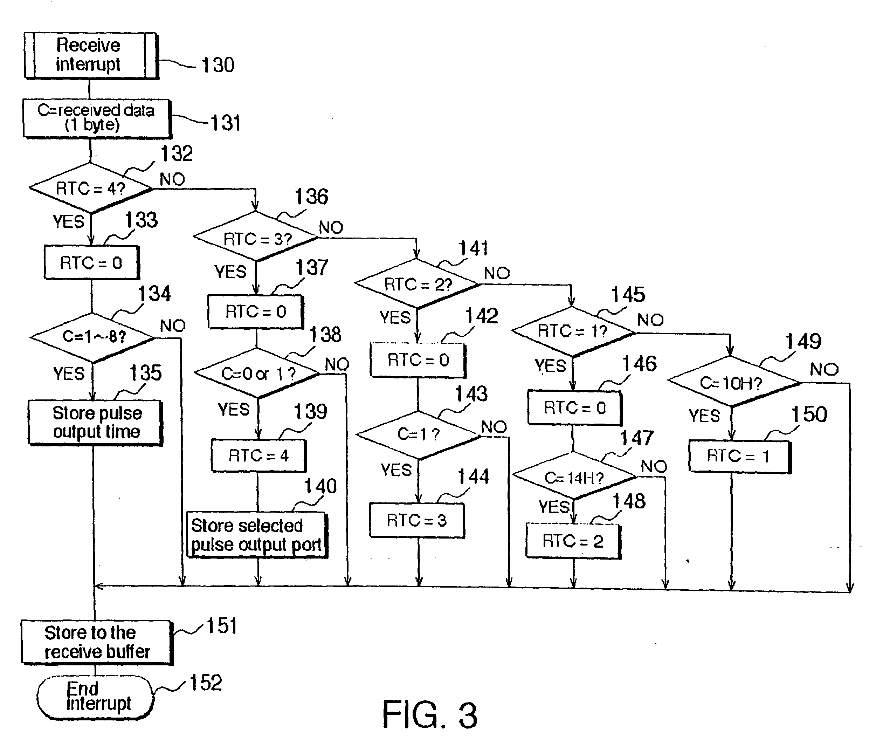

Fig. 3 shows the control sequence of the receive interrupt process of the interface by which the data receiving means 62 and real-time command interpreter 63 are implemented. Data sent from the host computer through interface 51 are received in data units of a particular size, which is defined as one byte by way of example only in the present embodiment. The process shown in Fig. 3 is therefore executed each time one data byte is received. The real-time command contains five bytes (DLE, DC4, n, m and t) as explained above, and is therefore analyzed using a counter RTC for counting the number of bytes received (in the following "RTC" will also be used as representing the count value of the RTC counter). Note that, although not shown in the drawings, counter RTC is initially reset to RTC = 0 such as during initilization of the printing apparatus upon power being switched on.

The process starts at step 130 when a byte C has been received and a receive interrupt generated by interface 51.

Byte C is read through the interface at step 131, and it is determined whether the condition RTC = 4 is met in step 132. If RTC = 4, i.e., if the sequence DLE, DC4, 1 and m of a real-time command has already been received, C is processed as parameter t. The RTC counter is then cleared in step 133.

If the value of C is from 1 to 8 (step 134), it is stored as pulse length (or representation of the pulse length) at a specific address in RAM 53 in step 135 (as will be understood the specific address corresponds to storage means 68 in Fig. 2). Note that all received data are initially stored in receive buffer 64, even real-time commands (step 151).

If the value C is outside the range from 1 to 8 (step 134), the counter remains cleared and the byte is stored to receive buffer 64 (step 151). Such values are illegal parameters and therefore prohibit the complete command from being processed. The byte is nevertheless stored to receive buffer 64 because it may be part of print data.

If RTC ≠ 4 in step 132, it is determined whether RTC = 3 in step 137 (RTC is set to 3 if DLE, DC4 and 1 have been received). If so, the RTC counter is cleared in step 137, and it is determined whether C is 0 or 1 (step 138). If C is 0 or 1, RTC is set to 4 (step 139), and the pulse output port number corresponding to the value of C is stored at a specified address in RAM 53 (step 140). The received byte is also stored to the receive buffer (step 151). If the value of C is not 0 or 1 (step 138), the counter remains cleared and the byte is stored to the receive buffer (step 151) for the same reason described above.

If RTC ≠ 3 in step 136, it is determined whether RTC = 2 in step 141 (RTC is set to 2 if DLE and DC4 have been received). If so, the RTC counter is cleared in step 142, and it is determined whether C is 1 (step 143). If C is 1, RTC is set to 3 (step 144), and the received byte is stored to the receive buffer (step 151). If the value of C is not 1 (step 143), the counter remains cleared and the byte is stored to the receive buffer (step 151).

Note that parameter n is used to identify the type of real-time command. As mentioned before, n = 1 represents a pulse output command. A value of n other than 1 may represent a different real-time command for execution of some other process with priority over normal commands. Because other real-time processes are not defined in the present embodiment, no real-time processing is performed if n ≠ 1.

If RTC ≠ 2 in step 141, it is determined whether RTC = 1 in step 145 (RTC is set to 1 if DLE has been received). If so, the RTC counter is cleared in step 146, and it is determined whether C is 14_{H} (the DC4 code) (step 147). If C is 14_{H}, RTC is set to 2 (step 148), and the byte is stored to the receive buffer (step 151). If the value of C is not 14h (step 147), the counter remains cleared and the byte is stored to the receive buffer (step 151).

If RTC ≠ 1 in step 145, it is determined whether C is 10_{H} (the DLE code) (step 149). If C is 10_{H}, RTC is set to 1 (step 150); if not, the byte is stored to the receive buffer (step 151) and the receive interrupt process is terminated (step 152). If in step 149 the value of C is not 10_{H}, the counter remains cleared and the byte is written to the receive buffer (step 151).

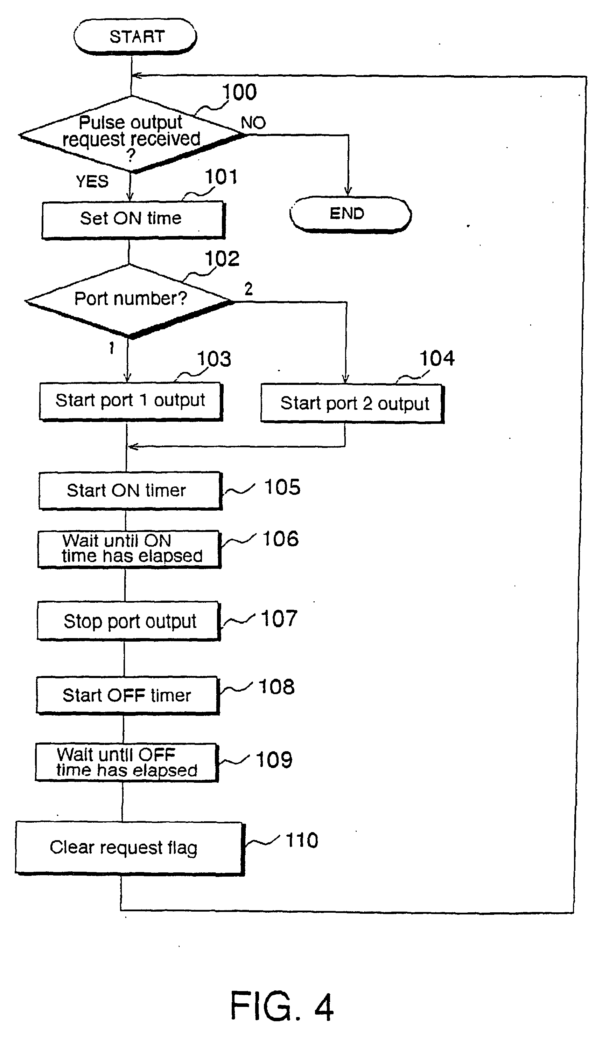

The pulse output control sequence is described next with reference to the flow chart in Fig. 4.

Control means 69 monitors the request flag stored in storage means 67, and reads the pulse length from storage means 68 (step 101) when a request flag is detected to be set (step 100 returns YES).

The port number for pulse output is read from a corresponding storage means (or determined from the request flag) (step 102), and the pulse is output (step 103 or step 104).

A timer for counting the ON time (pulse length) is activated (step 105), the process waits for the ON time (step 106), pulse output to the port is then stopped (step 107), an OFF time counter is started (step 108), and the process waits for the OFF time (step 109). When the OFF time has passed, the output request flag for the port for which an output request was issued is cleared (step 110), and the process loops back to step 100 to determine whether the next output request was received. If there is no output request, the process continues to look for the next output request.

It should be noted that the OFF time in the present embodiment is set to the same time as the ON time specified by command. It is also possible, however, to set the OFF time by means of a command parameter using a process similar to that described above. Note that the OFF time is set and pulse output requests are effectively prohibited during this OFF time period to limit the drive duty of the control object. More specifically, if an OFF time is not defined and commands are transferred continuously, the ON state duty of the control pulse may be excessively large.

In the present embodiment, the pulse output process shown in Fig. 4 is executed during the standby loop of the printing apparatus control program executed by CPU 50. This loop is not executed during the printing process, and the pulse output process is therefore not executed. In this case, the pulse output process is executed when one printing process is completed and the control program returns to the standby loop before starting the next process.

However, if it is necessary to execute the pulse output process irrespective of the printing process, the process can be executed by means of an internal interrupt, timer interrupt, or other known interrupt process.

If there is sufficient power supply capacity, the printing process and pulse output process can be executed in parallel. More specifically, the ON time wait period (step 106) and the OFF time wait period (step 109) in Fig. 4 can be used to easily achieve parallel printing and pulse output processes by means of time-shared printing control. Furthermore, the printing process functions can be handled by print controller 43 using a micro-controller, for example, and the pulse output process can be executed in parallel by CPU 50.

## Claims

1. A printing apparatus comprising:
data receiving means (51, 62) for receiving print data and control commands from a host device (61),
data storage means (53, 64) for storing print data and control commands received by said data receiving means (51, 62),
printer control means (50, 69) for reading print data and control commands stored in the data storage means in a first-in-first-out order and controlling a printing process accordingly,
command detection means (50, 63) responsive to said data receiving means for detecting a predetermined one among control commands directly received from said data receiving means (51, 62) without the intermediate of said data storage means (53, 64),, and
external device control means (50, 55, 71) for controlling an external device connected to the printing apparatus in accordance with a control command received by said data receiving means (51, 62),
**characterized in that** the printing apparatus further comprises:
two or more pulse generating means,
selection means for selecting one of the two or more pulse generating means according to said predetermined control command, and
information storage means (67, 68),
wherein said command detection means (50, 63) is adapted to store, when it detects said predetermined control command, in said information storage means (67, 68) a control output request indicating that control of said external device has been requested,
said external device control means (50, 55, 71) is responsive to said control output request stored in said information storage means (67, 68) for causing the selected one of said pulse generating means to issue a control signal to said external device, the length of the control signal being determined in accordance with said predetermined control command, and
said external device control means (50, 55, 71) is adapted to prohibit another control signal from being issued to said external device within a predetermined off-time after the end of said control signal.

2. The apparatus according to claim 1 wherein said external device control means (50, 55, 71) is adapted to control the external device in parallel to the operation of said printer control means (50, 69).

3. The apparatus according to claim 1 wherein said external device control means (50, 55, 71) is adapted to control the external device with priority over the operation of said printer control means (50, 69).

4. The apparatus according to claim 1 wherein said external device control means (50, 55, 71) is adapted to control the external device after the end of a printing process controlled by said printer control means (50, 69) when such printing process is being executed while said predetermined control command is detected.

5. The apparatus according to claim 1 wherein said external device is a cash drawer, and said external device control means is means for controlling opening of the cash drawer.

6. The apparatus according to claim 1 wherein
said data receiving means (51, 62) receives said control commands from the host device (61) in data units of a known size,
said predetermined control command comprises plural data units, and
said command detection means (50, 63) comprises:
a counter for counting the number of data units, and
comparison means for comparing each data unit received by said data receiving means with a respective data unit of the command pattern of said predetermined control command, said respective data unit determined according to the count value of said counter.

7. The apparatus according to claim 6 wherein said data receiving means (51, 62) and/or said command detection means (50, 63) is adapted to interrupt a printing process controlled by said printer control means (50, 69) for receiving data from the host device and/or detecting said predetermined control command.

8. A method for controlling a printing apparatus including the steps
(a) receiving print data and control commands from a host device,
(b) storing print data and control commands received in step (a),
(c) reading the print data and control commands stored in step (b) in a first-in-first-out order and controlling a printing process according to the command data,
(d) detecting, prior to step (b), whether any of the control commands received in step (a) is a predetermined control command, and
(e) controlling an external device connected to the printing apparatus according to a control command received in step (a),
**characterized in that**
step (d) comprises storing, when said predetermined control command is detected, in information storage means (67, 68) external control information indicating that control of said external device has been requested, and
step (e) comprises
(e1) polling said information storage means (67, 68) and determining whether or not said external control information is stored in said information storage means (67, 68), repeating step (e1) when no external control information is stored, and otherwise:
(e2) selecting among two or more pulse generators according to said predetermined control command,
(e3) causing the pulse generator selected in step (e2) to start issuing a control signal to said external device,
(e4) causing said pulse generator to stop. issuing the control signal after a predetermined time set in accordance with said predetermined control command has elapsed since the start in step (e3),
(e5) counting a predetermined off-time in repsonse to the end of said control signal, and prohibiting another control signal from being issued to said external device while the off-time is being counted, and
(e6) clearing said information storage means (67, 68) after lapse of said off-time.

9. The method according to claim 8 wherein step (e) is executed parallel to said controlling in step (c).

10. The method according to claim 8 wherein step (e) is executed with priority over said controlling in step (c).

11. The method according to claim 8 wherein step (e) is executed after the end of a printing process when a printing process is being executed.

12. The method according to claim 8 wherein
step (a) comprises receiving said control commands in data units of a known size, wherein said predetermined control command includes plural data units, and
step (d) comprises:
(d1) counting the number of data units, and
(d2) comparing each data unit received in step (a) with a respective data unit of the command pattern of said predetermined control command, said respective data unit determined according to the number counted in step (d1).

13. The method according to claim 12 wherein step (a) and/or step (d) are executed while interrupting a printing process.

## Patentansprüche

1. Druckapparat, umfassend:
Datenempfangsmittel (51, 62) zum Empfangen von Druckdaten und Steuerbefehlen von einer Hosteinrichtung (61),
Datenspeichermittel (53, 64) zum Speichern von Druckdaten und Steuerbefehlen, die durch die Datenempfangsmittel (51, 62) empfangen werden,
Druckersteuermittel (50, 69) zum Lesen von Druckdaten und Steuerbefehlen, die in den Datenspeichermitteln gespeichert sind, in einer FIFO-Reihenfolge und zur entsprechenden Steuerung eines Druckprozesses,
Befehlserfassungsmittel (50, 63), die auf die Datenempfangsmittel ansprechen, um einen vorbestimmten unter den Steuerbefehlen zu erfassen, die direkt ohne Zwischenschaltung der Datenspeichermittel (53, 64) von den Datenempfangsmitteln (51, 62) empfangen werden, und
Steuermittel (50, 55, 71) für eine externe Einrichtung zur Steuerung einer externen Einrichtung, die mit dem Druckapparat verbunden ist, nach Maßgabe eines Steuerbefehls, der von den Datenempfangsmitteln (51, 62) empfangen wird,
**dadurch gekennzeichnet, daß** der Druckapparat ferner umfaßt:
zwei oder mehr Impulsgeneratoreinrichtungen,
Wählmittel zum Auswählen einer der zwei oder mehr Impulsgeneratoreinrichtungen nach Maßgabe des vorbestimmten Steuerbefehls, und
Informationsspeichermittel (67,68),
wobei die Befehlserfassungsmittel (50, 63) beschaffen sind, wenn sie den vorbestimmten Steuerbefehl erfassen, in den Informationsspeichermitteln (67,68) eine Steuerausgabeanforderung zu speichern, die anzeigt, daß eine Steuerung der externen Einrichtung angefordert wurde,
die Steuermittel (50, 55, 71) für die externe Einrichtung als Antwort auf die in den Informationsspeichermitteln (67, 68) gespeicherte Steuerausgabeanforderung die ausgewählte der Impulsgeneratoreinrichtungen veranlaßt, ein Steuersignal an die externe Einrichtung auszugeben, wobei die Länge des Steuersignals abhängig von dem vorbestimmten Steuerbefehl festgelegt wird, und
die Steuermittel (50, 55, 71) für die externe Einrichtung beschaffen sind, zu verhindern, daß ein weiteres Steuersignal an die externe Einrichtung innerhalb einer vorbestimmten AUS-Zeit nach dem Ende des Steuersignals ausgegeben wird.

2. Apparat nach Anspruch 1, bei dem die Steuermittel (50, 55, 71) für die externe Einrichtung beschaffen sind, die externe Einrichtung parallel zum Betrieb der Druckersteuermittel (50, 69) zu steuern.

3. Apparat nach Anspruch 1, bei dem die Steuermittel (50, 55, 71) für die externe Einrichtung beschaffen sind, die externe Einrichtung mit Priorität gegenüber dem Betrieb der Druckersteuermittel (50, 69) zu steuern.

4. Apparat nach Anspruch 1, bei dem die Steuermittel (50, 55, 71) für die externe Einrichtung beschaffen sind, die externe Einrichtung nach dem Ende eines von den Druckersteuermitteln (50, 69) gesteuerten Druckprozesses zu steuern, wenn solch ein Druckprozeß ausgeführt wird, während der vorbestimmte Steuerbefehl erfaßt wird.

5. Apparat nach Anspruch 1, bei dem die externe Einrichtung eine Kassenlade ist und die Steuermittel für die externe Einrichtung Mittel zur Steuerung des Öffnens der Kassenlade sind.

6. Apparat nach Anspruch 1, bei dem
die Datenempfangsmittel (51, 62) die Steuerbefehle von der Hosteinrichtung (61) in Dateneinheiten bekannter Größe empfangen,
der vorbestimmte Steuerbefehl mehrere Dateneinheiten umfaßt, und
die Befehlserfassungsmittel (50, 63) umfassen:
einen Zähler zum Zählen der Anzahl von Dateneinheiten, und
Vergleichsmittel zum Vergleichen jeder Dateneinheit, die von den Datenempfangsmitteln empfangen wurde, mit einer jeweiligen Dateneinheit des Befehlsmusters des vorbestimmten Steuerbefehls, wobei die jeweilige Dateneinheit abhängig vom Zählwert des Zählers bestimmt wird.

7. Apparat nach Anspruch 6, bei dem die Datenempfangsmittel (51, 62) und/oder die Befehlserfassungsmittel (50, 63) beschaffen sind, einen Druckprozeß, der von den Druckersteuermitteln (50, 69) gesteuert wird, zu unterbrechen, um Daten von der Hosteinrichtung zu empfangen und/oder den vorbestimmten Steuerbefehl zu erfassen.

8. Verfahren zur Steuerung eines Druckapparats, umfassend die Schritte
(a) Empfangen von Druckdaten und Steuerbefehlen von einer Hosteinrichtung,
(b) Speichern von Druckdaten und Steuerbefehlen, die im Schritt (a) empfangen wurden,
(c) Auslesen der Druckdaten und Steuerbefehle, die im Schritt (b) gespeichert wurden, in einer FIFO-Reihenfolge und Steuern eines Druckprozesses nach Maßgabe der Befehlsdaten,
(d) Feststellen, vor Schritt (b), ob irgendeiner der Steuerbefehle, die im Schritt (a) empfangen werden, ein vorbestimmter Steuerbefehl ist, und
(e) Steuern einer externen Einrichtung, die mit dem Druckapparat verbunden ist, nach Maßgabe eines im Schritt (a) empfangenen Steuerbefehls,
**dadurch gekennzeichnet, daß**
Schritt (d) das Speichern von externer Steuerinformation, die anzeigt, daß eine Steuerung der externen Einrichtung angefordert wurde, in Informationsspeichermitteln (67,68) umfaßt, wenn der vorbestimmte Steuerbefehl erfaßt wird, und
Schritt (e) umfaßt
(e1) wiederholtes Abfragen der Informationsspeichermittel (67, 68) und Feststellen, ob oder ob nicht die externe Steuerinformation in den Informationsspeichermitteln (67, 68) gespeichert ist,
Wiederholen von Schritt (e1), wenn keine externe Steuerinformation gespeichert ist, und andernfalls:
(e2) Treffen einer Auswahl unter zwei oder mehr Impulsgeneratoren nach Maßgabe des vorbestimmten Steuerbefehls,
(e3) Veranlassen, daß der im Schritt (e2) ausgewählte Impulsgenerator beginnt, ein Steuersignal an die externe Einrichtung auszugeben,
(e4) Veranlassen, daß der Impulsgenerator die Ausgabe des Steuersignals stoppt, nachdem eine vorbestimmte Zeit, die nach Maßgabe des vorbestimmten Steuerbefehls eingestellt ist, seit dem Start in Schritt (e3) abgelaufen ist,
(e5) Zählen einer vorbestimmten AUS-Zeit als Antwort auf das Ende des Steuersignals, und
Verhindern, daß ein weiteres Steuersignal an die externe Einrichtung ausgegeben wird, während die AUS-Zeit gezählt wird, und
(e6) Löschen der Informationsspeichermittel (67, 68) nach Ablauf der AUS-Zeit.

9. Verfahren nach Anspruch 8, bei dem Schritt (e) parallel mit der Steuerung in Schritt (c) ausgeführt wird.

10. Verfahren nach Anspruch 8, bei dem Schritt (e) mit Priorität gegenüber der Steuerung im Schritt (c) ausgeführt wird.

11. Verfahren nach Anspruch 8, bei dem Schritt (e) nach dem Ende eines Druckprozesses ausgeführt wird, wenn ein Druckprozeß gerade ausgeführt wird.

12. Verfahren nach Anspruch 8, bei dem
Schritt (a) umfaßt, die Steuerbefehle in Dateneinheiten einer bekannten Größe zu empfangen, wobei der vorbestimmte Steuerbefehl mehrere Dateneinheiten umfaßt, und
Schritt (d) umfaßt:
(d1) Zählen der Anzahl von Dateneinheiten, und
(d2) Vergleichen jeder Dateneinheit, die im Schritt (a) empfangen wird, mit einer jeweiligen Dateneinheit des Befehlsmusters des vorbestimmten Steuerbefehls, wobei die jeweilige Dateneinheit nach Maßgabe der im Schritt (d1) gezählten Anzahl bestimmt wird.

13. Verfahren nach Anspruch 12, bei dem Schritt (a) und/oder Schritt (d) ausgeführt werden, während ein Druckprozeß unterbrochen wird.

## Revendications

1. Dispositif d'impression comportant :
des moyens (51, 62) de réception de données pour recevoir des données d'impression et des instructions de commande d'un dispositif (61) hôte,
des moyens (53, 64) de mémorisation de données destinés à mémoriser des données d'impression et des instructions de commande reçues par les moyens (51, 62) de réception de données,
des moyens (50, 69) de commande d'imprimante destinés à lire des données d'impression et des instructions de commande mémorisées dans les moyens de mémorisation de données suivant un ordre premier entré premier sorti et à commander un processus d'impression en conséquence,
des moyens (50, 63) de détection d'instruction sensibles aux moyens de réception de données en détectant une instruction déterminée à l'avance parmi des instructions de commande directement reçues des moyens (51, 62) de réception de données sans l'intermédiaire des moyens (53, 64) de mémorisation de données, et
des moyens (50, 55, 71) de commande de dispositif externe destinés à commander un dispositif externe relié au dispositif d'impression conformément à une instruction de commande reçue par les moyens (51, 62) de réception de données,
**caractérisé en ce que** le dispositif d'impression comporte en outre :
deux moyens ou plus de production d'impulsion,
des moyens de sélection destinés à sélectionner l'un des deux ou plus moyens de production d'impulsion conformément à l'instruction de commande déterminée à l'avance, et
des moyens (67, 68) de mémorisation d'information,
dans lesquels les moyens (50, 63) de détection d'instruction sont conçus pour mémoriser, lorsqu'ils détectent l'instruction de commande déterminée à l'avance, dans les moyens (67, 68) de mémorisation d'information une requête de sortie de commande indiquant que la commande du dispositif externe a été demandée,
les moyens (50, 55, 71) de commande de dispositif externe sont sensibles à la requête de sortie de commande mémorisée dans les moyens (67, 68) de mémorisation d'information pour faire en sorte que le moyen sélectionné des moyens de production d'impulsion délivre un signal de commande au dispositif externe, la longueur du signal de commande étant déterminée conformément à l'instruction de commande déterminée à l'avance, et
les moyens (50, 55, 71) de commande de dispositif externe sont conçus pour empêcher un autre signal de commande d'être délivré au dispositif externe à l'intérieur d'une durée de fermeture déterminée à l'avance après la fin du signal de commande.

2. Dispositif suivant la revendication 1, dans lequel les moyens (50, 55, 71) de commande de dispositif externe sont conçus pour commander le dispositif externe parallèlement au fonctionnement des moyens (50, 59) de commande d'imprimante.

3. Dispositif suivant la revendication 1, dans lequel les moyens (50, 55, 71) de commande de dispositif externe sont conçus pour commander le dispositif externe avec une priorité par rapport au fonctionnement des moyens (50, 59) de commande d'imprimante.

4. Dispositif suivant la revendication 1, dans lequel les moyens (50, 55, 71) de commande de dispositif externe sont conçus pour commander le dispositif externe après la fin d'un processus d'impression commandé par les moyens (50, 69) de commande d'imprimante lorsqu'un processus d'impression de ce genre est exécuté tandis que l'instruction de commande déterminée à l'avance est détectée.

5. Dispositif suivant la revendication 1, dans lequel le dispositif externe est un tiroir-caisse, et les moyens de commande de dispositif externe sont des moyens destinés à commander l'ouverture du tiroir-caisse.

6. Dispositif suivant la revendication 1, dans lequel
les moyens (51, 62) de réception de données reçoivent les instructions de commande du dispositif (61) hôte en unités de données d'une dimension connue,
l'instruction de commande déterminée à l'avance comporte plusieurs unités de données, et
les moyens (50, 63) de détection d'instruction comportent :
un compteur destiné à compter le nombre d'unités de données, et
des moyens de comparaison destinés à comparer chaque unité de données reçue par les moyens de réception de données avec une unité de données respective de la configuration d'instruction de l'instruction de commande déterminée à l'avance, l'unité de données respectives étant déterminée conformément à la valeur de comptage du compteur.

7. Dispositif suivant la revendication 6, dans lequel les moyens (51, 62) de réception de données et/ou les moyens (50, 63) de détection d'instruction sont conçus pour interrompre un processus d'impression commandé par les moyens (50, 69) de commande d'imprimante pour recevoir des données du dispositif hôte et/ou détecter l'instruction de commande déterminée à l'avance.

8. Procédé pour commander un dispositif d'impression comportant les étapes qui consistent à :
(a) recevoir des données d'impression et des instructions de commande d'un dispositif hôte,
(b) mémoriser des données d'impression et des instructions de commande reçues à l'étape (a),
(c) lire les données d'impression et les instructions de commande mémorisées à l'étape (b) suivant un ordre premier entré premier sorti et commander un processus d'impression conformément aux données d'instruction,
(d) détecter, avant l'étape (b), si l'une quelconque des instructions de commande reçues à l'étape (a) est une instruction de commande déterminée à l'avance, et
(e) commander un dispositif externe connecté au dispositif d'impression conformément à une instruction de commande reçue à l'étape (a),
**caractérisé en ce que**
l'étape (d) comporte l'étape qui consiste à mémoriser, lorsque l'instruction de commande déterminée à l'avance est détectée, dans des moyens (67, 68) de mémorisation de l'information des informations de commande externe indiquant que la commande du dispositif externe a été demandée, et
l'étape (e) comporte les étapes qui consistent à
(e1) interroger les moyens (67, 68) de mémorisation d'information et déterminer si oui ou non les informations de commande externe sont mémorisées dans les moyens (67, 68) de mémorisation d'information,
répéter l'étape (e1) lorsqu'aucune information de commande externe n'est mémorisée, et sinon :
(e2) sélectionner parmi deux générateurs d'impulsion ou plus conformément à l'instruction de commande déterminée à l'avance,
(e3) faire en sorte que le générateur d'impulsion sélectionné à l'étape (e2) commence à délivrer un signal de commande au dispositif externe,
(e4) faire en sorte que le générateur d'impulsion arrête de délivrer le signal de commande après qu'une durée déterminée à l'avance réglée conformément à l'instruction de commande déterminée à l'avance se soit écoulée depuis le démarrage de l'étape (e3),
(e5) compter un temps de fermeture déterminée à l'avance en réponse à la fin du signal de commande, et
(e6) empêcher un autre signal de commande d'être délivré au dispositif externe tandis que le temps de fermeture est compté, et
effacer les moyens (67, 68) de mémorisation d'information après l'écoulement du temps de fermeture.

9. Procédé suivant la revendication 8, dans lequel l'étape (e) est exécutée parallèlement à l'étape de commande à l'étape (c).

10. Procédé suivant la revendication 8, dans lequel l'étape (e) est exécutée avec une priorité par rapport à la commande à l'étape (c).

11. Procédé suivant la revendication 8, dans lequel l'étape (e) est exécutée après la fin d'un processus d'impression lorsqu'un processus d'impression est en train d'être exécuté.

12. Procédé suivant la revendication 8, dans lequel
l'étape (a) comporte l'étape qui consiste à recevoir les instructions de commande en unités de données d'une dimension connue, dans lequel l'instruction de commande déterminée à l'avance comporte plusieurs unités de données, et
l'étape (d) comporte les étapes qui consistent à :
(d1) compter le nombre d'unités de données, et
(d2) comparer chaque unité de données reçue à l'étape (a) avec une unité de données respective de la configuration d'instruction de l'instruction de commande déterminée à l'avance, l'unité de données respective étant déterminée conformément au nombre compté à l'étape (d1).

13. Procédé suivant la revendication 12, dans lequel l'étape (a) et/ou l'étape (d) sont mises en oeuvre tandis que l'on interrompt un processus d'impression.
